# EUROPEAN PATENT APPLICATION

(11) **EP 4 579 872 A1**
(43) Date of publication of application: **02.07.2025**
(21) Application number: 23899202.8
(22) Date of filing: 02.02.2023
(51) Int. Cl.: H01M 10/48, H01M 10/6556, H01M 10/625, G01N 17/00

(54) **THERMAL MANAGEMENT SYSTEM FOR BATTERY, BATTERY, AND ELECTRIC DEVICE**

(30) Priority: 06.12.2022 CN 202223253590 U
(71) Applicant: Contemporary Amperex Technology (Hong Kong) Limited, Central (HK)
(72) Inventor: ZHONG, Qing, Ningde, Fujian 352100 (CN); YANG, Zhibin, Ningde, Fujian 352100 (CN)
(74) Representative: Gong, Jinping
(86) International application number: PCT/CN2023/074297
(87) International publication number: WO 2024/119601

(57) **Abstract**

A thermal management system for battery, a battery (300), and an electric apparatus (1000) are provided, where the thermal management system includes a thermal management system body and a monitoring tube (100). The thermal management system body includes a medium pipe (200) for circulating a heat exchange medium, where the medium pipe (200) is provided with an inlet end (51) and an outlet end (52), and the detachable monitoring tube (100) is disposed on at least one of the inlet end (51) and the outlet end (52).

## Description

### CROSS-REFERENCE TO RELATED APPLICATIONS

This application claims priority to Chinese Patent Application No. 202223253590.8, filed on December 6, 2022, which is incorporated herein by reference in its entirety.

### TECHNICAL FIELD

This application relates to the field of battery technologies, and in particular, to a thermal management system for battery, a battery, and an electric apparatus.

### BACKGROUND

In the related art, a thermal management system is usually provided to adjust temperature of a battery so that the temperature of the battery is not excessively high or low. The thermal management system has pipes for circulating a heat exchange medium. During long-term use, the pipes may be subject to corrosion and leakage due to improper use or other reasons. Therefore, it is necessary to regularly inspect or detect corrosion of the pipes of the thermal management system for the purpose of timely maintenance.

However, in the related art, pipes of the thermal management system may be damaged during inspection or detection of corrosion of the pipes of the thermal management system, increasing the maintenance cost. How to inspect or detect the corrosion of pipes of the thermal management system with the purpose of facilitating maintenance and reducing maintenance cost is an urgent problem to be solved.

### SUMMARY

Embodiments of this application provide a thermal management system for battery, a battery, and an electric apparatus, so as to inspect or detect corrosion of pipes of the thermal management system without damaging the thermal management system, thereby facilitating maintenance and reducing the maintenance cost.

According to a first aspect, an embodiment of this application provides a thermal management system for battery, including a thermal management system body, where the thermal management system body includes a medium pipe for circulating a heat exchange medium, and the medium pipe is provided with an inlet end and an outlet end; and a monitoring tube, where the detachable monitoring tube is disposed on at least one of the inlet end and the outlet end.

In this technical solution, the detachable monitoring tube is disposed on at least one of the inlet end and outlet end of the medium pipe of the thermal management system, so that the heat exchange medium flows through not only the medium pipe but also the monitoring tube during circulation in the thermal management system. The monitoring tube is detachably connected to the inlet end or outlet end of the medium pipe. Therefore, the monitoring tube can be removed from the inlet end or outlet end of the medium pipe when it is necessary to inspect or detect corrosion of the medium pipe of the thermal management system. For example, corrosion in the monitoring tube can be inspected or detected through a nozzle of the monitoring tube, so as to learn about the corrosion situation of pipes of the thermal management system. In this way, corrosion of pipes of the thermal management system can be inspected or detected without damaging the thermal management system, facilitating maintenance and reducing the maintenance cost.

In some embodiments, a material of at least part of an inner wall of the monitoring tube is the same as a material of the medium pipe. In this case, the flowing environment of the heat exchange medium in the monitoring tube is close to or the same as that in the medium pipe, so that corrosion in the monitoring tube can reflect the overall corrosion situation of the pipe of the thermal management system more accurately.

In some embodiments, the monitoring tube is plug-connected to the medium pipe. With the monitoring tube plug-connected to the medium pipe, the monitoring tube can be mounted and dismounted more conveniently.

In some embodiments, a first nozzle and a second nozzle are arranged at axial ends of the monitoring tube respectively, and the inlet end or the outlet end is inserted into the monitoring tube through the first nozzle. With the inlet end or outlet end of the medium pipe inserted into the monitoring tube, the monitoring tube can be plug-connected to the medium pipe more conveniently.

In some embodiments, a first sealing piece is disposed between an inner circumferential wall of the monitoring tube and an outer circumferential wall of the medium pipe, or a first sealing piece is disposed between an outer circumferential wall of the monitoring tube and an inner circumferential wall of the medium pipe. The first sealing piece is disposed between the monitoring tube and the medium pipe to seal the gap therebetween, preventing leakage of the heat exchange medium at the fitting position between the monitoring tube and the medium pipe when the heat exchange medium flows through the monitoring tube.

In some embodiments, a first nozzle and a second nozzle are arranged at axial ends of the monitoring tube respectively, the inlet end or the outlet end is inserted into the monitoring tube through the first nozzle, and the first sealing piece is attached to the inner circumferential wall of the monitoring tube and wraps up the inlet end or the outlet end. By attaching the first sealing piece to the inner circumferential wall of the monitoring tube, the outer circumferential wall of the medium pipe presses the first sealing piece to deform when the inlet end or outlet end of the medium pipe is inserted into the monitoring tube. In this way, the inlet end or outlet end of the medium pipe can be inserted into the monitoring tube easily, and the medium pipe and the monitoring tube can be sealed.

In some embodiments, a first accommodating groove is formed on the inner circumferential wall of the monitoring tube, the first accommodating groove is formed into a ring shape extending in a circumferential direction of the monitoring tube, and the first sealing piece is accommodated in the first accommodating groove. The accommodating groove for accommodating the first sealing piece is disposed on the inner circumferential wall of the monitoring tube, which facilitates the disposition and attachment of the first sealing piece and restricts the position of the first sealing piece. This can prevent the first sealing piece from moving due to friction between the medium pipe and the first sealing piece in the process of mounting and dismounting the monitoring tube, so that the first sealing piece can be held in a specified position, guaranteeing the sealing effects of the first sealing piece.

In some embodiments, the first sealing piece includes a first guiding segment and a first sealing segment arranged in an axial direction of the monitoring tube, where the first guiding segment is located on a side of the first sealing segment adjacent to the first nozzle, a first guiding channel is defined on an inner circumferential side of the first guiding segment, and a cross-sectional area of the first guiding channel gradually decreases in an inserting direction of the inlet end or the outlet end, and the first sealing segment abuts against an outer circumferential wall of the inlet end or the outlet end. The part of the first sealing piece close to the first nozzle is in a flared shape, so that the inlet end or outlet end of the medium pipe can be quickly inserted into the first sealing piece through the first guiding channel, reducing the plug-connection resistance and facilitating the plug-connection between the medium pipe and the monitoring tube. In addition, the sealing effects of the first sealing piece are guaranteed by making the first sealing segment of the first sealing piece abut against the outer circumferential wall of the medium pipe.

In some embodiments, a first sealing protrusion is formed on an outer circumferential wall of the inlet end or the outlet end, the first sealing protrusion is formed into a ring shape extending in a circumferential direction of the medium pipe, and the first sealing protrusion abuts against the first sealing piece. By disposing the first sealing protrusion on the outer circumferential wall of the inlet end or outlet end of the medium pipe, the first sealing protrusion presses against the first sealing piece located in the monitoring tube when the inlet end or outlet end of the medium pipe is inserted into the monitoring tube. In this way, the outer circumferential wall of the inlet end or outlet end of the medium pipe closely fits the first sealing piece attached to the monitoring tube, further improving the sealing effects.

In some embodiments, the thermal management system further includes an external pipe, where the monitoring tube is connected between the external pipe and the medium pipe to form a circulating flow channel, and the monitoring tube is detachably connected to the external pipe. The monitoring tube is detachably connected to the external pipe of the thermal management system located outside the battery, allowing the entire monitoring tube to be removed from the thermal management system. This facilitates inspection or detection of corrosion in the monitoring tube.

In some embodiments, the monitoring tube includes a tube body and a window cover, a monitoring window is formed on an outer circumferential wall of the tube body, the monitoring window runs through an inner circumferential wall of the tube body, the window cover is arranged to cover the monitoring window, and the window cover is detachable and/or the window cover is a transparent part. The monitoring window on the circumferential wall of the monitoring tube provides a new pathway for inspection or detection of the monitoring tube, so that corrosion of the monitoring tube can be inspected or detected in a more convenient, accurate, and comprehensive manner.

In some embodiments, a material of the tube body is the same as the material of the medium pipe; and/or a material of the window cover is the same as the material of the medium pipe. In this case, the flowing environment of the heat exchange medium in the monitoring tube is close to or the same as that in the medium pipe, so that corrosion in the monitoring tube can reflect the overall corrosion situation of the pipe of the thermal management system more accurately.

In some embodiments, an inner wall surface of the window cover is flush with an inner wall surface of the tube body. In this case, the flowing environment of the heat exchange medium in the monitoring tube is close to or the same as that in the medium pipe, so that corrosion in the monitoring tube can reflect the overall corrosion situation of the pipe of the thermal management system more accurately.

In some embodiments, an outer wall surface of the window cover is flush with an outer wall surface of the tube body. This can prevent the window cover from protruding from the tube body to occupy extra space, achieving a compact structure, and can also prevent a larger step from being formed between the window cover and the tube body to protect the operator or other components from scratching.

In some embodiments, a third sealing piece is disposed between the window cover and the tube body. By disposing the third sealing piece between the window cover and the tube body, the gap between the window cover and the tube body can be sealed, preventing leakage of the heat exchange medium at the fitting position between the window cover and the tube body when the heat exchange medium flows through the monitoring tube.

In some embodiments, the window cover and the tube body are connected using a fastener. The window cover is mounted and fastened at the monitoring window of the tube body using the fastener, facilitating the mounting and dismounting of the window cover and ensuring the strength of the connection between the window cover and the tube body.

In some embodiments, the monitoring window is formed into a stepped hole, and an outer circumferential wall of the window cover is formed into a step shape to fit into the stepped hole. By setting the monitoring window to be a stepped hole and setting the outer circumferential wall of the window cover to be in a step shape fitting into the stepped hole, the fitting area between the window cover and the tube body is increased and the window cover can be mounted and fastened more conveniently.

In some embodiments, the monitoring window includes a first hole segment and a second hole segment arranged in a wall thickness direction of the tube body, where a cross-sectional area of the first hole segment is larger than a cross-sectional area of the second hole segment and the first hole segment is located outside the second hole segment in a radial direction, and a step surface is formed between the first hole segment and the second hole segment; the window cover includes a cover plate and a boss, where the boss is disposed on an inner side of the cover plate, the cover plate is accommodated in the first hole segment and abuts against the step surface, and the boss is accommodated in the second hole segment. By setting the monitoring window to be stepped holes larger from inside out, corrosion in the tube body can be inspected or detected through the monitoring window conveniently. In addition, the window cover is set to be a structure with the boss, and part of the cover plate located on the outer circumferential side of the boss supports and abuts against the step surface in the monitoring window. This improves the mounting stability of the window cover, and facilitates the mounting and dismounting of the window cover because the step surface can support the cover plate during mounting and dismounting of the window cover.

In some embodiments, a third sealing piece is disposed between the cover plate and the step surface. By disposing the third sealing piece between the cover plate of the window cover and the step surface of the tube body, the gap between the window cover and the tube body can be sealed, preventing leakage of the heat exchange medium at the fitting position between the window cover and the tube body when the heat exchange medium flows through the monitoring tube. In addition, the third sealing piece is disposed between the cover plate and the step surface, and the step surface can support the third sealing piece, facilitating the mounting and attachment of the third sealing piece.

In some embodiments, a third accommodating groove is formed on the step surface, the third accommodating groove is formed into a ring shape extending in a circumferential direction of the first hole segment, and the third sealing piece is accommodated in the third accommodating groove. The third accommodating groove for accommodating the third sealing piece is disposed on the step surface, which facilitates the disposition and attachment of the third sealing piece and restricts the position of the third sealing piece. This can prevent the third sealing piece from moving, thereby guaranteeing the sealing effects of the third sealing piece.

In some embodiments, a first connecting hole is formed on the cover plate, a second connecting hole is formed on the step surface, and a fastener runs through the first connecting hole and the second connecting hole to fasten the window cover to the tube body. The fastener runs through the cover plate, step surface, then into the tube body, so that the cover plate can be reliably mounted at the monitoring window of the tube body. Because the fastener runs into the tube body through the step surface of the tube body, the fastener can be mounted easily.

In some embodiments, the second connecting hole is a blind hole. The second connecting hole on the step surface of the tube body is set to a blind hole. This can prevent the second connecting hole from penetrating the inner circumferential wall of the tube body to cause the heat exchange medium in the monitoring tube to leak through the fitting position between the second connecting hole and the fastener, thereby strengthening the sealing between the window cover and the tube body.

According to a second aspect, an embodiment of this application further provides a battery, including at least one battery cell and the foregoing thermal management system, where the thermal management system is configured to adjust temperature of the battery cell. With the thermal management system, corrosion of pipes of the thermal management system can be inspected or detected without damaging the thermal management system, which facilitates maintenance and reduces the maintenance cost.

In some embodiments, the battery includes a box, where the battery cell and the thermal management system body are both disposed inside the box, the inlet end and the outlet end are both disposed outside the box, and the monitoring tube is disposed outside the box. With the monitoring tube disposed outside the box for the battery, corrosion can be inspected or detected after removing the monitoring tube from the battery, without a need of dismounting the box for the battery. This facilitates the inspection or detection of pipe corrosion in the thermal management system.

According to a third aspect, an embodiment of this application further provides an electric apparatus, including the foregoing battery, where the battery is configured to supply electric energy to the electric apparatus. With the thermal management system, corrosion of pipes of the thermal management system can be inspected or detected without damaging the thermal management system, which facilitates maintenance and reduces the maintenance cost.

Additional aspects and advantages of this application will be described below in part, and some will be explicit in the following description or may be learned by practicing this application.

### BRIEF DESCRIPTION OF DRAWINGS

The above and/or additional aspects and advantages of this application will become obviously easy to understand from the description of the embodiments with reference to the following drawings.
FIG. 1 is a schematic diagram of a battery according to some embodiments of this application, where a monitoring tube is removed from an inlet end or an outlet end of a medium pipe;
FIG. 2 is a schematic diagram of a monitoring tube of a thermal management system according to some embodiments of this application;
FIG. 3 is a sectional view taken along a line A-A in FIG. 2;
FIG. 4 is a diagram of assembly of a monitoring tube and a medium pipe of a thermal management system according to some embodiments of this application;
FIG. 5 is an enlarged view of position B in FIG. 3;
FIG. 6 is an exploded view of a monitoring tube of a thermal management system according to some embodiments of this application;
FIG. 7 is a top view of a tube body of the monitoring tube in FIG. 6;
Fig. 8 is a side view of a window cover of the monitoring tube in FIG. 6; and
FIG. 9 is a schematic diagram of an electric apparatus according to some embodiments of this application.

Reference signs:
1000: electric apparatus;
300: battery; 301: box;
100: monitoring tube;
10: tube body; 101: first nozzle; 102: second nozzle; 11: first accommodating groove; 12: monitoring window; 121: first hole segment; 122: second hole segment; 13: step surface; 14: second accommodating groove; 15: third accommodating groove; 16: second connecting hole;
20: window cover; 21: cover plate; 211: first connecting hole; 22: boss;
30: first sealing piece; 31: first guiding segment; 311: first guiding channel; 32: first sealing segment; 40: second sealing piece; 41: second guiding segment; 411: second guiding channel; 42: second sealing segment; 50: third sealing piece; 60: fastener;
200: medium pipe; 51: inlet end; 52: outlet end; and 53: first sealing protrusion.

### DESCRIPTION OF EMBODIMENTS

The embodiments of this application are described in detail below. Examples of the embodiments are shown in the accompanying drawings, and the same or similar reference signs indicate the same or similar components or components with the same or similar functions. The embodiments described below with reference to the accompanying drawings are illustrative and merely for explaining this application, and cannot be construed as any limitations on this application.

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application belongs. The terms used in the specification of this application are intended to merely describe the specific embodiments rather than to limit this application. The terms "include", "comprise", and any variations thereof in the specification and claims of this application as well as the foregoing description of the drawings are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various places in the specification does not necessarily refer to the same embodiment, or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection; and a direct connection, an indirect connection via an intermediate medium, or an internal communication between two elements. A person of ordinary skills in the art can understand specific meanings of these terms in this application based on specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that the thickness, length, width and other dimensions of various components in the embodiments of the application shown in the drawings, as well as the overall thickness, length and width of the integrated apparatus, are for illustrative purposes only, and should not constitute any limitation to this application.

In this application, "a plurality of" means two (inclusive) or more.

In this application, a battery 300 is a single physical module that includes one or more battery cells for providing a higher voltage and capacity. The plurality of battery cells may be connected in series, parallel, or series-parallel to directly form the battery 300, and a series-parallel connection means a combination of series and parallel connections among the plurality of battery cells. The plurality of battery cells may be connected in series, parallel, or series-parallel to form battery modules, and then a plurality of battery modules are connected in series, parallel, or series-parallel to form the battery 300. For example, the battery 300 mentioned in this application may include a battery module, a battery pack, or the like.

In this application, the battery cell may include a lithium-ion secondary battery, a lithium-ion primary battery, a lithium-sulfur battery, a sodium-lithium-ion battery, a sodium-ion battery, a magnesium-ion battery, or the like, which is not limited in this embodiment of this application. The battery cell may be cylindrical, flat, cuboid, or of other shapes, which is not limited in this embodiment of this application either. The battery cells are typically divided into three types by packaging method: cylindrical battery cell, prismatic battery cell, and pouch battery cell. This is not limited in this embodiment of this application either.

For example, the battery cell may include a battery housing, an electrode assembly, and an electrolyte, where the battery housing is configured to accommodate the electrode assembly and electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. A positive electrode current collector uncoated with the positive electrode active substance layer bulges out of a positive electrode current collector coated with the positive electrode active substance layer, and the positive electrode current collector uncoated with the positive electrode active substance layer is used as a positive tab. A lithium-ion battery is used as an example, for which, the positive electrode current collector may be made of aluminum and the positive electrode active substance may be lithium cobaltate, lithium iron phosphate, ternary lithium, lithium manganate, or the like.

The negative electrode plate includes a negative electrode current collector and a negative electrode active substance layer. The negative electrode active substance layer is applied on a surface of the negative electrode current collector. A negative electrode current collector uncoated with the negative electrode active substance layer bulges out of a negative electrode current collector coated with the negative electrode active substance layer, and the negative electrode current collector uncoated with the negative electrode active substance layer is used as a negative tab. The negative electrode current collector may be made of copper, and the negative electrode active substance may be carbon, silicon, or the like. To allow a large current to pass through without any fusing, a plurality of positive tabs are provided and stacked together, and a plurality of negative tabs are provided and stacked together.

The separator may be made of PP (polypropylene, polypropylene), PE (polyethylene, polyethylene), or the like. In addition, the electrode assembly may be a wound structure or a laminated structure, but the embodiments of this application are not limited thereto.

Some batteries 300 may include a box 301 for encapsulating one or more battery cells or a plurality of battery modules, and the box 301 can prevent liquid or other foreign matters from affecting the charging or discharging of the battery cells. Certainly, some batteries 300 may not include the box 301 but are directly disposed in a battery mounting compartment of an electric apparatus 1000.

To prevent the temperature of the battery cell from being excessively high or low, a thermal management system is used to adjust the temperature of the battery cell, thereby ensuring the reliable operation and long service life of the entire battery 300. The thermal management system has pipes for circulating a heat exchange medium. When flowing along the pipes of the thermal management system, the heat exchange medium can dissipate heat generated by the battery cell or heat the battery cell, so as to adjust the temperature of the battery cell.

During long-term use of the battery 300, the pipe of the thermal management system may be subject to corrosion and leakage due to improper use or other reasons. Therefore, it is necessary to regularly inspect or detect corrosion of the pipes of the thermal management system for the purpose of timely maintenance.

In the related art, pipes of the thermal management system may be damaged during inspection or detection of corrosion of the pipes of the thermal management system, and the pipes need to be repaired. This not only hinders inspection or detection of pipe corrosion of the thermal management system, but also increases the maintenance cost.

In view of this, to facilitate the pipe maintenance of the thermal management system and reduce the maintenance cost, the applicant has proposed, through in-depth research, a thermal management system for the battery 300. The thermal management system includes a thermal management system body and a monitoring tube 100. The thermal management system body includes a medium pipe 200 for circulating a heat exchange medium, where the medium pipe 200 is provided with an inlet end 51 and an outlet end 52, and the detachable monitoring tube 100 is disposed on at least one of the inlet end 51 and the outlet end 52.

In the technical solution of this application, the detachable monitoring tube 100 is disposed on at least one of the inlet end 51 and the outlet end 52 of the medium pipe 200 of the thermal management system. During circulation in the thermal management system, the heat exchange medium flows through both the medium pipe 200 and the monitoring tube 100. The monitoring tube 100 is detachable, so the monitoring tube 100 can be removed when corrosion of the medium pipe 200 of the thermal management system needs to be inspected or detected. Corrosion in the monitoring tube 100 is inspected or detected, so as to learn about the corrosion situation of pipes of the thermal management system. In this way, corrosion of pipes of the thermal management system can be inspected or detected without damaging the thermal management system, facilitating maintenance and reducing the maintenance cost.

The battery 300 disclosed in this embodiment of this application may be used without limitation in an electric apparatus 1000 such as a vehicle, a ship, or an aircraft. The electric apparatus 1000 may use a power supply system having the battery 300 disclosed in this application, so that the maintenance difficulty and maintenance cost of the battery 300 of the electric apparatus 1000 can be reduced.

An embodiment of this application provides an electric apparatus 1000 using the battery 300 as a power source. The electric apparatus 1000 may be, but is not limited to, an electric bicycle, an electric vehicle, a ship, a spacecraft, or the like. The electric vehicle may include a truck, a construction vehicle, a car, and the like, and the spacecraft may include an airplane, a rocket, a space shuttle, a spaceship, and the like.

The following describes a thermal management system for the battery 300 according to an embodiment of this application with reference to the accompanying drawings.

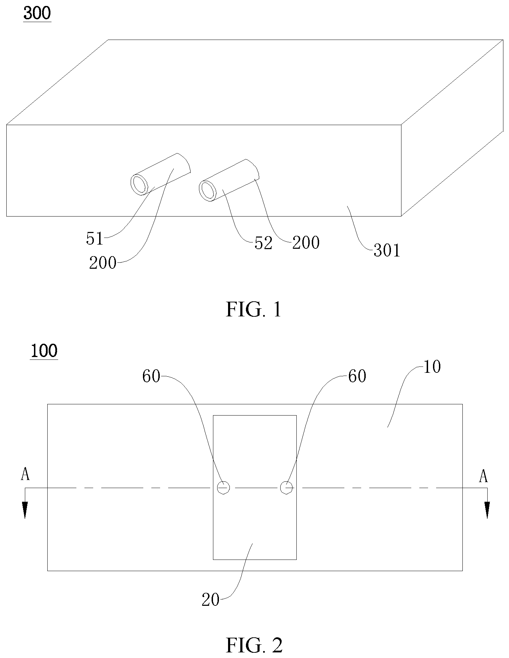

As shown in FIG. 1 to FIG. 4, according to a first aspect, an embodiment of this application provides a thermal management system for the battery 300, including a thermal management system body and a monitoring tube 100. The thermal management system body includes a medium pipe 200 for circulating a heat exchange medium, where the medium pipe 200 is provided with an inlet end 51 and an outlet end 52, and the detachable monitoring tube 100 is disposed on at least one of the inlet end 51 and the outlet end 52.

When the heat exchange medium is flowing in the thermal management system, the heat exchange medium can enter the thermal management system body through the inlet end 51 of the medium pipe 200. When flowing through the thermal management system body, the heat exchange medium can dissipate the heat generated by the battery cell or heat the battery cell, and then flow out of the thermal management system body through the outlet end 52 of the medium pipe 200.

Optionally, the heat exchange medium may be water, or the heat exchange medium may be a mixture of water and glycol.

The detachable monitoring tube 100 is disposed on at least one of the inlet end 51 and the outlet end 52. For example, the detachable monitoring tube 100 is disposed on the inlet end 51 of the medium pipe 200, the detachable monitoring tube 100 is disposed on the outlet end 52 of the medium pipe 200, or the detachable monitoring tube 100 is disposed on both the inlet end 51 and the outlet end 52 of the medium pipe 200.

When the detachable monitoring tube 100 is disposed on the inlet end 51 of the medium pipe 200, the heat exchange medium can flow through the monitoring tube 100 and enter the thermal management system body through the inlet end 51 of the medium pipe 200. When flowing through the thermal management system body, the heat exchange medium can dissipate the heat generated by the battery cell or heat the battery cell, and then flow out of the thermal management system body through the outlet end 52 of the medium pipe 200.

When the detachable monitoring tube 100 is disposed on the outlet end 52 of the medium pipe 200, the heat exchange medium can enter the thermal management system body through the inlet end 51 of the medium pipe 200. When flowing through the thermal management system body, the heat exchange medium can dissipate the heat generated by the battery cell or heat the battery cell, and then flow out of the thermal management system body through the outlet end 52 of the medium pipe 200 and flow through the monitoring tube 100.

When the detachable monitoring tube 100 is disposed on both the inlet end 51 and the outlet end 52 of the medium pipe 200, the heat exchange medium can flow through the monitoring tube 100 connected to the inlet end 51 and enter the thermal management system body through the inlet end 51 of the medium pipe 200. When flowing through the thermal management system body, the heat exchange medium can dissipate the heat generated by the battery cell or heat the battery cell, flow out of the thermal management system body through the outlet end 52 of the medium pipe 200, and then flow through the monitoring tube 100 connected to the outlet end 52.

The detachable monitoring tube 100 means that the monitoring tube 100 can be removed from the inlet end 51 or the outlet end 52 of the medium pipe 200, without damaging the thermal management system, and the removed monitoring tube 100 can be reassembled to the inlet end 51 or the outlet end 52 of the medium pipe 200. The detachable connection between the monitoring tube 100 and the inlet end 51 or the outlet end 52 of the medium pipe 200 may include at least one of a plug connection, a clamping connection, and a connection through a fastener 60.

In this technical solution, the detachable monitoring tube 100 is disposed on at least one of the inlet end 51 and outlet end 52 of the medium pipe 200 of the thermal management system, so that the heat exchange medium flows through not only the medium pipe 200 but also the monitoring tube 100 during circulation in the thermal management system. The monitoring tube 100 is detachably connected to the inlet end 51 or outlet end 52 of the medium pipe 200. Therefore, the monitoring tube 100 can be removed from the inlet end 51 or outlet end 52 of the medium pipe 200 when it is necessary to inspect or detect corrosion of the medium pipe 200 of the thermal management system. For example, corrosion in the monitoring tube 100 can be inspected or detected through a nozzle of the monitoring tube 100, so as to learn about the corrosion situation of pipes of the thermal management system. In this way, corrosion of pipes of the thermal management system can be inspected or detected without damaging the thermal management system, facilitating maintenance and reducing the maintenance cost.

In some embodiments, a material of at least part of an inner wall of the monitoring tube 100 is the same as a material of the medium pipe 200.

The material of at least part of the inner wall of the monitoring tube 100 is the same as that of the medium pipe 200, which may include the following cases. For example, the material of part of the inner wall of the monitoring tube 100 is the same as that of the medium pipe 200. For another example, the material of the entire inner wall of the monitoring tube 100 is the same as that of the medium pipe 200. For still another example, the material of the entire monitoring tube 100 is the same as that of the medium pipe 200.

It can be understood that different materials may have varying anti-corrosion performance for the same heat exchange medium. When the heat exchange medium is flowing through the monitoring tube 100, the heat exchange medium is in contact with at least part of the inner wall of the monitoring tube 100. By making the material of at least part of the inner wall of the monitoring tube 100 the same as that of the medium pipe 200, the flowing environment of the heat exchange medium in the monitoring tube 100 is close to or the same as that in the medium pipe 200, so that corrosion in the monitoring tube 100 can reflect the overall corrosion situation of the pipe of the thermal management system more accurately.

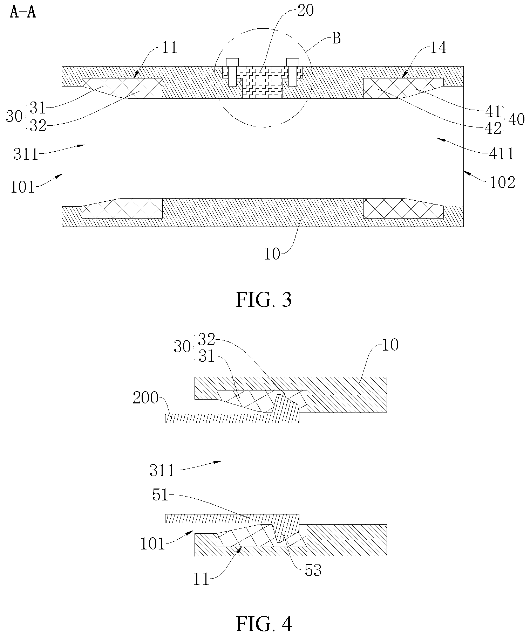

In some embodiments, referring to FIG. 3 and FIG. 4, the monitoring tube 100 is plug-connected to the medium pipe 200.

For example, the monitoring tube 100 is inserted into the inlet end 51 or the outlet end 52 of the medium pipe 200, or the inlet end 51 or the outlet end 52 of the medium pipe 200 is inserted into the monitoring tube 100.

Depending on the plug-connection between the monitoring tube 100 and the medium pipe 200, the monitoring tube 100 can be inserted or removed to conveniently implement the separation and assembly of the monitoring tube 100 and the medium pipe 200. In this way, the monitoring tube 100 can be mounted and dismounted more conveniently.

In some embodiments, referring to FIG. 3 and FIG. 4, a first nozzle 101 and a second nozzle 102 are arranged at axial ends of the monitoring tube 100 respectively, and the inlet end 51 or the outlet end 52 is inserted into the monitoring tube 100 through the first nozzle 101. With the inlet end 51 or outlet end 52 of the medium pipe 200 inserted into the monitoring tube 100, the monitoring tube 100 can be plug-connected to the medium pipe 200 more conveniently.

In some embodiments, referring to FIG. 3 and FIG. 4, a first sealing piece 30 is disposed between an inner circumferential wall of the monitoring tube 100 and an outer circumferential wall of the medium pipe 200, or a first sealing piece 30 is disposed between an outer circumferential wall of the monitoring tube 100 and an inner circumferential wall of the medium pipe 200.

For example, when the inlet end 51 or the outlet end 52 of the medium pipe 200 is inserted into the monitoring tube 100, the first sealing piece 30 may be disposed between the inner circumferential wall of the monitoring tube 100 and the outer circumferential wall of the medium pipe 200. When the monitoring tube 100 is inserted into the inlet end 51 or the outlet end 52 of the medium pipe 200, the first sealing piece 30 may be disposed between the outer circumferential wall of the monitoring tube and the inner circumferential wall of the medium pipe 200.

Optionally, the first sealing piece 30 may be a rubber sealant or a silicone sealant.

The first sealing piece 30 is disposed between the monitoring tube 100 and the medium pipe 200 to seal the gap therebetween, preventing leakage of the heat exchange medium at the fitting position between the monitoring tube 100 and the medium pipe 200 when the heat exchange medium flows through the monitoring tube 100.

In some embodiments, referring to FIG. 3 and FIG. 4, a first nozzle 101 and a second nozzle 102 are arranged at axial ends of the monitoring tube 100 respectively, and the inlet end 51 or the outlet end 52 is inserted into the monitoring tube 100 through the first nozzle 101. The first sealing piece 30 is attached to the inner circumferential wall of the monitoring tube 100 and wraps up the inlet end 51 or the outlet end 52.

By attaching the first sealing piece 30 to the inner circumferential wall of the monitoring tube 100, the outer circumferential wall of the medium pipe 200 presses the first sealing piece 30 to deform when the inlet end 51 or outlet end 52 of the medium pipe 200 is inserted into the monitoring tube 100. In this way, the inlet end 51 or outlet end 52 of the medium pipe 200 can be inserted into the monitoring tube 100 easily, and the medium pipe 200 and the monitoring tube 100 can be sealed.

In some embodiments, referring to FIG. 3 and FIG. 4, a first accommodating groove 11 is formed on the inner circumferential wall of the monitoring tube 100, the first accommodating groove 11 is formed into a ring shape extending in a circumferential direction of the monitoring tube 100, and the first sealing piece 30 is accommodated in the first accommodating groove 11.

The accommodating groove for accommodating the first sealing piece 30 is disposed on the inner circumferential wall of the monitoring tube 100, which facilitates the disposition and attachment of the first sealing piece 30 and restricts the position of the first sealing piece 30. This can prevent the first sealing piece 30 from moving due to friction between the medium pipe 200 and the first sealing piece 30 in the process of mounting and dismounting the monitoring tube 100, so that the first sealing piece 30 can be held in a specified position, guaranteeing the sealing effects of the first sealing piece 30.

In some embodiments, referring to FIG. 3 and FIG. 4, the first sealing piece 30 includes a first guiding segment 31 and a first sealing segment 32 arranged in an axial direction of the monitoring tube 100, where the first guiding segment 31 is located on a side of the first sealing segment 32 adjacent to the first nozzle 101, a first guiding channel 311 is defined on an inner circumferential side of the first guiding segment 31, a cross-sectional area of the first guiding channel 311 gradually decreases in an inserting direction of the inlet end 51 or the outlet end 52, and the first sealing segment 32 abuts against an outer circumferential wall of the inlet end 51 or the outlet end 52.

The part of the first sealing piece 30 close to the first nozzle 101 is in a flared shape, so that the inlet end 51 or outlet end 52 of the medium pipe 200 can be quickly inserted into the first sealing piece 30 through the first guiding channel 311, reducing the plug-connection resistance and facilitating the plug-connection between the medium pipe 200 and the monitoring tube 100. In addition, the sealing effects of the first sealing piece 30 are guaranteed by making the first sealing segment 32 of the first sealing piece 30 abut against the outer circumferential wall of the medium pipe 200.

In some embodiments, referring to FIG. 4, a first sealing protrusion 53 is formed on an outer circumferential wall of the inlet end 51 or the outlet end 52, the first sealing protrusion 53 is formed into a ring shape extending in a circumferential direction of the medium pipe 200, and the first sealing protrusion 53 abuts against the first sealing piece 30.

By disposing the first sealing protrusion 53 on the outer circumferential wall of the inlet end 51 or outlet end 52 of the medium pipe 200, the first sealing protrusion 53 presses against the first sealing piece 30 located in the monitoring tube 100 when the inlet end 51 or outlet end 52 of the medium pipe is inserted into the monitoring tube 100. In this way, the outer circumferential wall of the inlet end 51 or outlet end 52 of the medium pipe closely fits the first sealing piece 30 attached to the monitoring tube 100, further improving the sealing effects.

In some embodiments, referring to FIG. 3, the thermal management system further includes an external pipe, where the monitoring tube 100 is connected between the external pipe and the medium pipe 200 to form a circulating flow channel, and the monitoring tube 100 is detachably connected to the external pipe.

When the detachable monitoring tube 100 is disposed at the inlet end 51 of the medium pipe 200, one end of the monitoring tube 100 is detachably connected to the inlet end 51 of the medium pipe 200, the other end of the monitoring tube 100 is detachably connected to one end of the external pipe, and another end of the external pipe is connected to the outlet end 52 of the medium pipe 200, thereby forming a circulating flow channel for the heat exchange medium.

When the detachable monitoring tube 100 is disposed at the outlet end 52 of the medium pipe 200, one end of the monitoring tube 100 is detachably connected to the outlet end 52 of the medium pipe 200, the other end of the monitoring tube 100 is detachably connected to one end of the external pipe, and another end of the external pipe is connected to the inlet end 51 of the medium pipe 200, thereby forming a circulating flow channel for the heat exchange medium.

When the detachable monitoring tube 100 is disposed at both the inlet end 51 and the outlet end 52 of the medium pipe 200, one end of the monitoring tube 100 connected to the inlet end 51 is detachably connected to the inlet end 51 of the medium pipe 200, and the other end of the monitoring tube 100 connected to the inlet end 51 is detachably connected to one end of the external pipe. One end of the monitoring tube 100 connected to the outlet end 52 is detachably connected to the outlet end 52 of the medium pipe 200, and the other end of the monitoring tube 100 connected to the outlet end 52 is detachably connected to another end of the external pipe, thereby forming a circulating flow channel for the heat exchange medium.

The detachable connection between the monitoring tube 100 and the external pipe may include at least one of a plug connection, a clamping connection, and a connection through a fastener 60.

The monitoring tube 100 is detachably connected to the external pipe of the thermal management system located outside the battery 300, allowing the entire monitoring tube 100 to be removed from the thermal management system. This facilitates inspection or detection of corrosion in the monitoring tube 100.

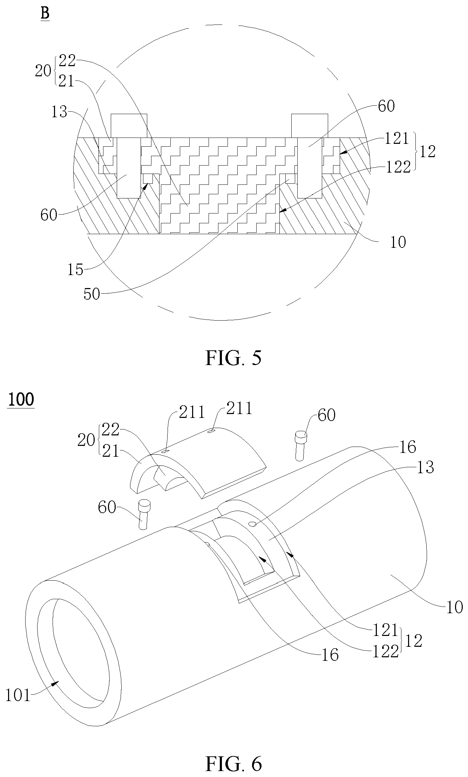

In some embodiments, referring to FIG. 5 to FIG. 8, the monitoring tube 100 includes a tube body 10 and a window cover 20, a monitoring window 12 is formed on an outer circumferential wall of the tube body 10, the monitoring window 12 runs through an inner circumferential wall of the tube body 10, the window cover 20 is arranged to cover the monitoring window 12, and the window cover 20 is detachable and/or the window cover 20 is a transparent part.

That the window cover 20 is detachable and/or the window cover 20 is a transparent part may include the following cases. For example, the window cover 20 is detachable; for another example, the window cover 20 is a transparent part; or for still another example, the window cover 20 is detachable and the window cover 20 is a transparent part.

Among these cases, when the window cover 20 is detachable and corrosion in the monitoring tube 100 needs to be inspected or detected, the monitoring tube 100 is removed from the inlet end 51 or the outlet end 52 of the medium pipe 200, or the window cover 20 is removed from the monitoring window 12 of the monitoring tube 100. In this way, corrosion in the monitoring tube 100 can be inspected or detected through the monitoring window 12 or through the nozzle of the tube body 10. This increases the pathways for inspecting or detecting corrosion in the monitoring tube 100, so that corrosion in the monitoring tube 100 can be inspected or detected in a more accurate, comprehensive, convenient, and flexible manner.

When the window cover 20 is a transparent part and corrosion in the monitoring tube 100 needs to be inspected or detected, the monitoring tube 100 is removed from the inlet end 51 or the outlet end 52 of the medium pipe 200. In this way, corrosion in the monitoring tube 100 can be inspected or detected through the window cover 20 or through the nozzle of the tube body 10. This increases the pathways for inspecting or detecting corrosion in the monitoring tube 100, so that corrosion in the monitoring tube 100 can be inspected or detected in a more accurate, comprehensive, convenient, and flexible manner.

In a case that the window cover 20 is detachable and the window cover 20 is a transparent part, when it is necessary to inspect or detect corrosion in the monitoring tube 100, the monitoring tube 100 is removed from the inlet end 51 or the outlet end 52 of the medium pipe 200. The window cover 20 can be removed or not from the monitoring window 12 of the monitoring tube 100 based on needs. If the window cover 20 is removed from the monitoring window 12 of the monitoring tube 100, corrosion in the monitoring tube 100 can be inspected or detected through the monitoring window 12; if the window cover 20 is removed, corrosion in the monitoring tube 100 can be observed through the nozzle of the tube body 10. This increases the pathways for inspecting or detecting corrosion in the monitoring tube 100, so that corrosion in the monitoring tube 100 can be inspected or detected in a more accurate, comprehensive, convenient, and flexible manner.

The monitoring window 12 on the circumferential wall of the monitoring tube 100 provides a new pathway for inspection or detection of the monitoring tube 100, so that corrosion of the monitoring tube 100 can be inspected or detected in a more convenient, accurate, and comprehensive manner.

Optionally, one or more monitoring windows 12 may be provided, and each monitoring window 12 is covered by the window cover 20. When a plurality of monitoring windows 12 are provided, the monitoring windows 12 may be spaced apart along the axial direction and/or circumferential direction of the tube body 10. When there are a plurality of monitoring windows 12, more pathways can be provided for inspecting or detecting corrosion in the monitoring tube 100, so that inspection can be performed in a more accurate, comprehensive, convenient, and flexible manner.

In some embodiments, the material of the tube body 10 is the same as that of the medium pipe 200; and/or the material of the window cover 20 is the same as that of the medium pipe 200.

For example, the material of the tube body 10 may be the same as that of the medium pipe 200. In this case, the flowing environment of the heat exchange medium in the monitoring tube 100 is close to or the same as that in the medium pipe 200, so that corrosion in the monitoring tube can reflect the overall corrosion situation of the monitoring tube 100 of the thermal management system more accurately. When it is necessary to inspect or detect corrosion in the monitoring tube 100, corrosion in the tube body 10 may be inspected or detected through the monitoring window 12 or the nozzle of the tube body 10.

For another example, the material of the window cover 20 may be the same as that of the medium pipe 200. In this case, the flowing environment of the heat exchange medium in the monitoring tube 100 is close to or the same as that in the medium pipe 200, so that corrosion in the monitoring tube can reflect the overall corrosion situation of the monitoring tube 100 of the thermal management system more accurately. When it is necessary to inspect or detect corrosion in the monitoring tube 100, the window cover 20 can be removed from the monitoring window 12, so as to inspect or detect corrosion on the inner wall of the window cover 20.

For another example, the material of the tube body 10 may be the same as that of the medium pipe 200 and the material of the window cover 20 may be the same as that of the medium pipe 200. In this case, the flowing environment of the heat exchange medium in the monitoring tube 100 is close to or the same as that in the medium pipe 200, so that corrosion in the monitoring tube can reflect the overall corrosion situation of the monitoring tube 100 of the thermal management system more accurately. When it is necessary to inspect or detect corrosion in the monitoring tube 100, corrosion in the tube body 10 may be inspected or detected through the monitoring window 12 or the nozzle of the tube body 10, or corrosion on the inner wall of the window cover 20 may be inspected.

In this case, the flowing environment of the heat exchange medium in the monitoring tube 100 is close to or the same as that in the medium pipe 200, so that corrosion in the monitoring tube 100 can reflect the overall corrosion situation of the pipe of the thermal management system more accurately.

In some embodiments, referring to FIG. 5, an inner wall surface of the window cover 20 is flush with an inner wall surface of the tube body 10.

The inner wall surface of the window cover 20 refers to a wall surface of the window cover 20 facing the flow channel in the monitoring tube 100, and may be in contact with the heat exchange medium. The inner wall surface of the tube body 10 refers to a wall surface of the window cover 20 facing the flow channel in the monitoring tube 100, and may be in contact with the heat exchange medium.

That the inner wall surface of the window cover 20 is flush with the inner wall surface of the tube body 10 may include: the inner wall surface of the window cover 20 is exactly flush with the inner wall surface of the tube body 10; and the inner wall surface of the window cover 20 is not exactly flush with the inner wall surface of the tube body 10 due to manufacturing or assembly errors.

In this case, the flowing environment of the heat exchange medium in the monitoring tube 100 is close to or the same as that in the medium pipe 200, so that corrosion in the monitoring tube 100 can reflect the overall corrosion situation of the pipe of the thermal management system more accurately.

In some embodiments, referring to FIG. 5, an outer wall surface of the window cover 20 is flush with an outer wall surface of the tube body 10.

The outer wall surface of the window cover 20 refers to a wall surface of the window cover 20 exposed to the outside, and the outer wall surface of the tube body 10 refers to a wall surface of the tube body 10 exposed to the outside.

That the outer wall surface of the window cover 20 is flush with the outer wall surface of the tube body 10 may include: the outer wall surface of the window cover 20 is exactly flush with the outer wall surface of the tube body 10; and the outer wall surface of the window cover 20 is not exactly flush with the outer wall surface of the tube body 10 due to manufacturing or assembly errors.

This can prevent the window cover 20 from protruding from the tube body 10 to occupy extra space, achieving a compact structure, and can also prevent a larger step from being formed between the window cover 20 and the tube body 10 to protect the operator or other components from scratching.

In some embodiments, referring to FIG. 5, a third sealing piece 50 is disposed between the window cover 20 and the tube body 10.

Optionally, the third sealing piece 50 may be a rubber sealant or a silicone sealant.

By disposing the third sealing piece 50 between the window cover 20 and the tube body 10, the gap between the window cover 20 and the tube body 10 can be sealed, preventing leakage of the heat exchange medium at the fitting position between the window cover 20 and the tube body 10 when the heat exchange medium flows through the monitoring tube 100.

In some embodiments, referring to FIG. 5 to FIG. 8, the window cover 20 and the tube body 10 are connected using a fastener 60.

Optionally, the fastener 60 may be a threaded fastener 60. For example, the fastener 60 may be a screw or bolt.

The window cover 20 is mounted and fastened at the monitoring window 12 of the tube body 10 using the fastener 60, facilitating the mounting and dismounting of the window cover 20 and ensuring the strength of the connection between the window cover 20 and the tube body 10.

In some embodiments, referring to FIG. 5 to FIG. 8, the monitoring window 12 is formed into a stepped hole, and an outer circumferential wall of the window cover 20 is formed into a step shape to fit into the stepped hole.

The outer circumferential wall of the window cover 20 refers to a wall of the window cover 20 fitting with the inner circumferential wall of the monitoring window 12.

By setting the monitoring window 12 to be a stepped hole and setting the outer circumferential wall of the window cover 20 to be in a step shape fitting into the stepped hole, the fitting area between the window cover 20 and the tube body 10 is increased and the window cover 20 can be mounted and fastened more conveniently.

In some embodiments, referring to FIG. 5 to FIG. 8, the monitoring window 12 includes a first hole segment 121 and a second hole segment 122 arranged in a wall thickness direction of the tube body 10, where a cross-sectional area of the first hole segment 121 is larger than a cross-sectional area of the second hole segment 122 and the first hole segment 121 is located outside the second hole segment 122 in a radial direction, and a step surface 13 is formed between the first hole segment 121 and the second hole segment 122; the window cover 20 includes a cover plate 21 and a boss 22, where the boss 22 is disposed on an inner side of the cover plate 21, the cover plate 21 is accommodated in the first hole segment 121 and abuts against the step surface 13, and the boss 22 is accommodated in the second hole segment 122.

The inner side of the cover plate 21 refers to a side of the cover plate 21 facing the flow channel in the tube body 10.

When the window cover 20 includes the cover plate 21 and the boss 22, the inner wall surface of the window cover 20 refers to a wall surface of the boss 22 facing the flow channel in the monitoring tube 100.

By setting the monitoring window 12 to be stepped holes larger from inside out, corrosion in the tube body 10 can be inspected or detected through the monitoring window 12 conveniently. In addition, the window cover 20 is set to be a structure with the boss 22, and part of the cover plate 21 located on the outer circumferential side of the boss 22 supports and abuts against the step surface 13 in the monitoring window 12. This improves the mounting stability of the window cover 20, and facilitates the mounting and dismounting of the window cover 20 because the step surface 13 can support the cover plate 21 during mounting and dismounting of the window cover 20.

In some embodiments, referring to FIG. 5, a third sealing piece 50 is disposed between the cover plate 21 and the step surface 13.

Optionally, the third sealing piece 50 may be attached to the step surface 13.

By disposing the third sealing piece 50 between the cover plate 21 of the window cover 20 and the step surface 13 of the tube body 10, the gap between the window cover 20 and the tube body 10 can be sealed, preventing leakage of the heat exchange medium at the fitting position between the window cover 20 and the tube body 10 when the heat exchange medium flows through the monitoring tube 100. In addition, the third sealing piece 50 is disposed between the cover plate 21 and the step surface 13, and the step surface 13 can support the third sealing piece 50, facilitating the mounting and attachment of the third sealing piece 50.

In some embodiments, referring to FIG. 5 to FIG. 7, a third accommodating groove 15 is formed on the step surface 13, the third accommodating groove 15 is formed into a ring shape extending in a circumferential direction of the first hole segment 121, and the third sealing piece 50 is accommodated in the third accommodating groove 15.

The third accommodating groove 15 for accommodating the third sealing piece 50 is disposed on the step surface 13, which facilitates the disposition and attachment of the third sealing piece 50 and restricts the position of the third sealing piece 50. This can prevent the third sealing piece 50 from moving, thereby guaranteeing the sealing effects of the third sealing piece 50.

In some embodiments, referring to FIG. 5 to FIG. 7, a first connecting hole 211 is formed on the cover plate 21, a second connecting hole 16 is formed on the step surface 13, and a fastener 60 runs through the first connecting hole 211 and the second connecting hole 16 to fasten the window cover 20 to the tube body 10.

The fastener 60 runs through the cover plate 21, step surface 13, then into the tube body 10, so that the cover plate 21 can be reliably mounted at the monitoring window 12 of the tube body 10. Because the fastener 60 runs into the tube body 10 through the step surface 13 of the tube body 10, the fastener 60 can be mounted easily.

In some embodiments, referring to FIG. 5, the second connecting hole 16 is a blind hole.

The second connecting hole 16 is a blind hole, which means that the second connecting hole 16 does not penetrate the inner wall surface of the tube body 10.

The second connecting hole 16 on the step surface 13 of the tube body 10 is set to be a blind hole. This can prevent the second connecting hole 16 from penetrating the inner circumferential wall of the tube body 10 to cause the heat exchange medium in the monitoring tube 100 to leak through the fitting position between the second connecting hole 16 and the fastener 60, thereby strengthening the sealing between the cover plate 21 and the tube body 10.

According to a second aspect, referring to FIG. 1, an embodiment of this application further provides a battery 300, including at least one battery cell and the foregoing thermal management system, where the thermal management system is configured to adjust temperature of the battery cell.

With the thermal management system, corrosion of pipes of the thermal management system can be inspected or detected without damaging the thermal management system, which facilitates maintenance and reduces the maintenance cost.

In some embodiments, referring to FIG. 1, the battery 300 includes a box 301, where the battery cell and the thermal management system body are both disposed inside the box 301, and an inlet end 51 and an outlet end 52 of a medium pipe 200 are disposed outside the box 301, and a monitoring tube 100 is disposed outside the box 301.

With the monitoring tube 100 disposed outside the box 301 for the battery 300, corrosion can be inspected or detected after removing the monitoring tube 100 from the battery 300, without a need of dismounting the box 301 for the battery 300. This facilitates the inspection or detection of pipe corrosion in the thermal management system.

According to a third aspect, an embodiment of this application further provides an electric apparatus 1000, including the battery 300, where the battery 300 is configured to supply electric energy to the electric apparatus 1000.

With the thermal management system, corrosion of pipes of the thermal management system can be inspected or detected without damaging the thermal management system, which facilitates maintenance and reduces the maintenance cost.

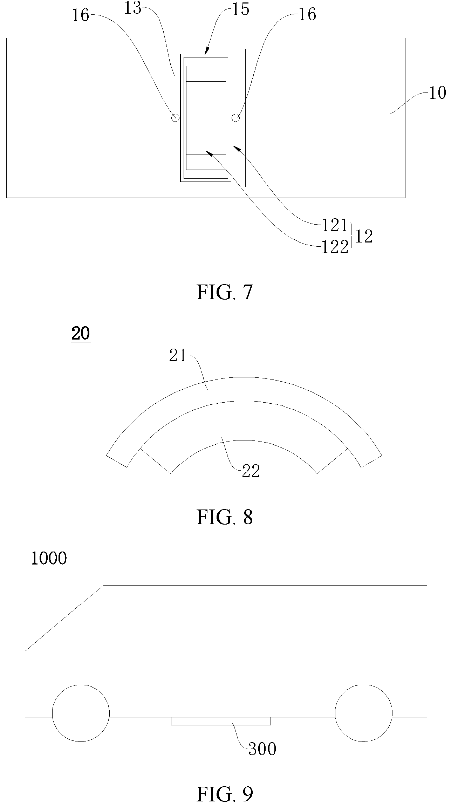

Optionally, as shown in FIG. 9, when the battery 300 is used in a vehicle, the battery 300 may be disposed at the bottom, front, or rear of the vehicle. The battery 300 may be configured to supply power to the vehicle. For example, the battery 300 may be used as an operational power source for the vehicle. The vehicle may further include a controller and a motor, where the controller is configured to control the battery 300 to supply power to the motor, for example, to satisfy power needs of start, navigation, and driving of the vehicle.

The following describes a thermal management system and a battery 300 having the same according to some specific embodiments of this application with reference to FIG. 1 to FIG. 8.

In this embodiment, the battery 300 includes a box 301, at least one battery cell, and a thermal management system. The thermal management system includes a thermal management body, a monitoring tube 100, and an external pipe. The battery cell and the thermal management system body are both disposed inside the box 301, an inlet end 51 and an outlet end 52 of a medium pipe 200 are both disposed outside the box 301, at least one of the inlet end 51 and the outlet end 52 of the medium pipe 200 is provided with the detachable monitoring tube 100, where the monitoring tube 100 is disposed outside the box 301, one end of the monitoring tube 100 is plug-connected to the inlet end 51 or the outlet end 52, and the other end of the monitoring tube 100 is plug-connected to the external pipe.

The monitoring tube 100 includes a tube body 10, a window cover 20, a first sealing piece 30, a second sealing piece 40, a third sealing piece 50, and a fastener 60, where a monitoring window 12 is formed on an outer circumferential wall of the tube body 10 and runs through an inner circumferential wall of the tube body 10, and the window cover 20 is detachably disposed to cover the monitoring window 12. The tube body 10 is a round tube, the window cover 20 extends in an arc shape along the circumferential direction of the tube body 10, an inner wall surface of the window cover 20 is flush with an inner wall surface of the tube body 10, and an outer wall surface of the window cover 20 is flush with an outer wall surface of the tube body 10. Materials of the tube body 10 and the window cover 20 are the same as that of the medium pipe 200. A cross-sectional area of the flow channel in the tube body 10 is the same as that of the flow channel in the medium pipe 200.

The monitoring window 12 is formed into a stepped hole, and an outer circumferential wall of the window cover 20 is formed into a step shape to fit into the stepped hole. The monitoring window 12 includes a first hole segment 121 and a second hole segment 122 arranged in a wall thickness direction of the tube body 10, where the first hole segment 121 is located outside the second hole segment 122 in a radial direction, and a step surface 13 is formed between the first hole segment 121 and the second hole segment 122. The window cover 20 includes a cover plate 21 and a boss 22, where the boss 22 is disposed inside the cover plate 21, the cover plate 21 is accommodated in the first hole segment 121 and abuts against the step surface 13, and the boss 22 is accommodated in the second hole segment 122.

A third sealing piece 50 is disposed between the cover plate 21 and the step surface 13, a third accommodating groove 15 is formed on the step surface 13, and the third sealing piece 50 is accommodated in the third accommodating groove 15. A first connecting hole 211 is formed on the cover plate 21, and a second connecting hole 16 is formed on the step surface 13, where the second connecting hole 16 is a blind hole, and the fastener 60 runs through the first connecting hole 211 and the second connecting hole 16 to fasten the window cover 20 to the tube body 10.

The tube body 10 is provided with a first nozzle 101 and a second nozzle 102 arranged opposite each other in an axial direction. The first accommodating groove 11 and a second accommodating groove 14 are formed on the inner circumferential wall of the tube body 10, where the first accommodating groove 11 is disposed adjacent to the first nozzle 101, the second accommodating groove 14 is disposed adjacent to the second nozzle 102, the first sealing piece 30 is accommodated in the first accommodating groove 11, and the second sealing piece 40 is accommodated in the first accommodating groove 11. In the axial direction of the tube body 10, the monitoring window 12 is disposed between the first accommodating groove 11 and the second accommodating groove 14.

The first sealing piece 30 includes a first guiding segment 31 and a first sealing segment 32 arranged in the axial direction of the tube body 10, where the first guiding segment 31 is located on a side of the first sealing segment 32 adjacent to the first nozzle 101, a first guiding channel 311 is defined on an inner circumferential side of the first guiding segment 31, and a cross-sectional area of the first guiding channel 311 gradually decreases in an inserting direction of the inlet end 51 or the outlet end 52. A first sealing protrusion 53 is formed on an outer circumferential wall of the inlet end 51 or the outlet end 52.

The second sealing piece 40 includes a second guiding segment 41 and a second sealing segment 42 arranged in the axial direction of the tube body 10, where the second guiding segment 41 is located on a side of the second sealing segment 42 adjacent to the second nozzle 102, a second guiding channel 411 is defined on an inner circumferential side of the second guiding segment 41, and a cross-sectional area of the second guiding channel 411 gradually decreases in an inserting direction of the external pipe. A second sealing protrusion is formed on an outer circumferential wall of the external pipe, and the second sealing protrusion is formed into a ring shape extending in a circumferential direction of the external pipe.

When the monitoring tube 100 is arranged between the inlet end 51 or the outlet end 52 of the medium pipe 200 and the external pipe, the inlet end 51 or the outlet end 52 of the medium pipe 200 is inserted into the tube body 10 through the first nozzle 101 and quickly reaches the inner circumferential side of the first sealing piece 30 along the first guiding channel 311. The first sealing protrusion 53 at the inlet end 51 or the outlet end 52 of the medium pipe 200 abuts against the first sealing piece 30 for sealing purposes. One end of the external pipe is inserted into the tube body 10 through the second nozzle 102 and quickly reaches the inner circumferential side of the second sealing piece 40 along the second guiding channel 411. The second sealing protrusion at one end of the external pipe abuts against the second sealing piece 40 for sealing purposes.

When it is necessary to inspect or detect corrosion in the monitoring tube 100, one end of the monitoring tube 100 can be detached from the inlet end 51 or the outlet end 52 of the medium pipe 200, and the other end of the monitoring tube 100 can be detached from the external pipe. After the monitoring tube 100 is dismounted, the window cover 20 of the monitoring tube 100 may be removed, so that corrosion in the monitoring tube 100 can be detected or inspected through at least one of the monitoring window 12, the first nozzle 101, and the second nozzle 102. In addition, corrosion on the inner wall of the window cover 20 can also be detected or inspected. In this way, corrosion in the monitoring tube 100 can be inspected in multiple paths from different angles.

In the description of this specification, the description referring to the terms "an embodiment", "some embodiments", "exemplary embodiments", "an example", "a specific example", or "some examples" means a specific feature, structure, material or characteristic described with reference to the embodiment or example is included in at least one embodiment or example of the this application. In this specification, illustrative expressions of these terms do not necessarily refer to the same embodiment or example. Moreover, the specific feature, structure, material, or characteristic described may be combined in any suitable manner in any one or more embodiments or examples.

Although the embodiments of this application have been shown and described, persons of ordinary skill in the art can understand that various changes, modifications, substitutions, and variants of these embodiments may be made without departing from the principle and essence of this application, and the scope of this application is limited by the claims and its equivalents.

## Claims

1. A thermal management system for battery, comprising:
a thermal management system body, wherein the thermal management system body comprises a medium pipe for circulating a heat exchange medium, and the medium pipe is provided with an inlet end and an outlet end; and
a monitoring tube, wherein the detachable monitoring tube is disposed on at least one of the inlet end and the outlet end.

2. The thermal management system according to claim 1, wherein a material of at least part of an inner wall of the monitoring tube is the same as a material of the medium pipe.

3. The thermal management system according to claim 1 or 2, wherein the monitoring tube is plug-connected to the medium pipe.

4. The thermal management system according to claim 3, wherein a first nozzle and a second nozzle are arranged at axial ends of the monitoring tube respectively, and the inlet end or the outlet end is inserted into the monitoring tube through the first nozzle.

5. The thermal management system according to claim 3, wherein a first sealing piece is disposed between an inner circumferential wall of the monitoring tube and an outer circumferential wall of the medium pipe, or a first sealing piece is disposed between an outer circumferential wall of the monitoring tube and an inner circumferential wall of the medium pipe.

6. The thermal management system according to claim 5, wherein a first nozzle and a second nozzle are arranged at axial ends of the monitoring tube respectively, the inlet end or the outlet end is inserted into the monitoring tube through the first nozzle, and the first sealing piece is attached to the inner circumferential wall of the monitoring tube and wraps up the inlet end or the outlet end.

7. The thermal management system according to claim 6, wherein a first accommodating groove is formed on the inner circumferential wall of the monitoring tube, the first accommodating groove is formed into a ring shape extending in a circumferential direction of the monitoring tube, and the first sealing piece is accommodated in the first accommodating groove.

8. The thermal management system according to claim 6, wherein the first sealing piece comprises a first guiding segment and a first sealing segment arranged in an axial direction of the monitoring tube, wherein the first guiding segment is located on a side of the first sealing segment adjacent to the first nozzle, a first guiding channel is defined on an inner circumferential side of the first guiding segment, and a cross-sectional area of the first guiding channel gradually decreases in an inserting direction of the inlet end or the outlet end, and the first sealing segment abuts against an outer circumferential wall of the inlet end or the outlet end.

9. The thermal management system according to claim 6, wherein a first sealing protrusion is formed on an outer circumferential wall of the inlet end or the outlet end, the first sealing protrusion is formed into a ring shape extending in a circumferential direction of the medium pipe, and the first sealing protrusion abuts against the first sealing piece.

10. The thermal management system according to any one of claims 1 to 9, further comprising an external pipe, wherein the monitoring tube is connected between the external pipe and the medium pipe to form a circulating flow channel, and the monitoring tube is detachably connected to the external pipe.

11. The thermal management system according to any one of claims 1 to 10, wherein the monitoring tube comprises a tube body and a window cover, a monitoring window is formed on an outer circumferential wall of the tube body, the monitoring window runs through an inner circumferential wall of the tube body, the window cover is arranged to cover the monitoring window, and the window cover is detachable and/or the window cover is a transparent part.

12. The thermal management system according to claim 11, wherein a material of the tube body is the same as the material of the medium pipe; and/or a material of the window cover is the same as the material of the medium pipe.

13. The thermal management system according to claim 11, wherein an inner wall surface of the window cover is flush with an inner wall surface of the tube body.

14. The thermal management system according to claim 11, wherein an outer wall surface of the window cover is flush with an outer wall surface of the tube body.

15. The thermal management system according to claim 11, wherein a third sealing piece is disposed between the window cover and the tube body.

16. The thermal management system according to claim 11, wherein the window cover and the tube body are connected using a fastener.

17. The thermal management system according to claim 11, wherein the monitoring window is formed into a stepped hole, and an outer circumferential wall of the window cover is formed into a step shape to fit into the stepped hole.

18. The thermal management system according to claim 17, wherein the monitoring window comprises a first hole segment and a second hole segment arranged in a wall thickness direction of the tube body, wherein a cross-sectional area of the first hole segment is larger than a cross-sectional area of the second hole segment, the first hole segment is located outside the second hole segment in a radial direction, and a step surface is formed between the first hole segment and the second hole segment; and the window cover comprises a cover plate and a boss, wherein the boss is disposed on an inner side of the cover plate, the cover plate is accommodated in the first hole segment and abuts against the step surface, and the boss is accommodated in the second hole segment.

19. The thermal management system according to claim 18, wherein a third sealing piece is disposed between the cover plate and the step surface.

20. The thermal management system according to claim 19, wherein a third accommodating groove is formed on the step surface, the third accommodating groove is formed into a ring shape extending in a circumferential direction of the first hole segment, and the third sealing piece is accommodated in the third accommodating groove.

21. The thermal management system according to claim 18, wherein a first connecting hole is formed on the cover plate, a second connecting hole is formed on the step surface, and a fastener runs through the first connecting hole and the second connecting hole to fasten the window cover to the tube body.

22. The thermal management system according to claim 21, wherein the second connecting hole is a blind hole.

23. A battery, comprising:
at least one battery cell; and
a thermal management system, wherein the thermal management system is the thermal management system according to any one of claims 1 to 22, and the thermal management system is configured to adjust temperature of the battery cell.

24. The battery according to claim 23, comprising a box, wherein the battery cell and the thermal management system body are both disposed inside the box, the inlet end and the outlet end are both disposed outside the box, and the monitoring tube is disposed outside the box.

25. An electric apparatus, comprising the battery according to claim 23 or 24.
